(19) **Europäisches Patentamt / European Patent Office / Office européen des brevets**

(11) **EP 2 208 355 B1**

(12) **FASCICULE DE BREVET EUROPEEN**

(45) Date de publication et mention de la délivrance du brevet:
**18.05.2011 Bulletin 2011/20**

(51) Int Cl.:
*H04N 13/00* (2006.01)    *G02B 27/22* (2006.01)
*G06T 17/00* (2006.01)

(21) Numéro de dépôt: **08836268.6**

(22) Date de dépôt: **03.10.2008**

(86) Numéro de dépôt international:
**PCT/EP2008/063273**

(87) Numéro de publication internationale:
**WO 2009/043923 (09.04.2009 Gazette 2009/15)**

(54) **PROCÉDÉ DE SYNCHRONISATION DE FLUX VIDÉO**

VERFAHREN ZUM SYNCHRONISIEREN VON VIDEOSTRÖMEN

METHOD FOR SYNCHRONISING VIDEO STREAMS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.10.2007 FR 0707007**

(43) Date de publication de la demande:
**21.07.2010 Bulletin 2010/29**

(73) Titulaires:
 • **THALES**
  **92200 Neuilly-sur-Seine (FR)**
 • **Université Pierre et Marie Curie**
  **75252 Paris Cedex 05 (FR)**

(72) Inventeurs:
 • **GUITTENY, Vincent**
  **F-75019 Paris (FR)**
 • **COUVET, Serge**
  **F-95280 Jouy Le Moutier (FR)**
 • **BENOSMAN, Ryad Benjamin**
  **F-75010 Paris (FR)**

(74) Mandataire: **Lucas, Laurent Jacques et al**
 **Marks & Clerk France**
 **Conseils en Propriété Industrielle**
 **Immeuble " Visium "**
 **22, avenue Aristide Briand**
 **94117 Arcueil Cedex (FR)**

(56) Documents cités:
 WO-A-98/03021    WO-A-2004/049255
 JP-A- 11 203 476    JP-A- 2006 228 144

## Description

La présente invention concerne un procédé de synchronisation de différents flux vidéo. La synchronisation de flux vidéo est notamment utilisée afin d'analyser des flux vidéo issus de plusieurs caméras différentes filmant par exemple une même scène sous des angles de vue différents. Les domaines d'applications de l'analyse de flux vidéo sont par exemple : la surveillance du trafic routier, la surveillance urbaine sécuritaire, la reconstruction en trois dimensions de villes par exemple, l'analyse d'événements sportifs, l'aide au diagnostique médical, le cinéma.

L'utilisation de caméras vidéo ne concerne plus uniquement la réalisation d'oeuvres cinématographiques. En effet, une diminution du prix et de la taille des caméras vidéo permet de disposer de nombreuses caméras dans des lieux divers. De plus, l'augmentation de la puissance de calcul des calculateurs permet l'exploitation de systèmes d'acquisition vidéo complexes, comportant de multiples caméras. L'exploitation des systèmes d'acquisition vidéo comporte une phase d'analyse des données vidéo issues des multiples caméras. Cette phase d'analyse est particularisée selon le domaine d'utilisation des données vidéo. Parmi les domaines utilisant couramment l'analyse de données vidéo, on trouve :

- la gestion du trafic routier ;
- la surveillance de lieux publics ;
- la reconstruction en trois dimensions de personnes en mouvement ;
- l'acquisition aérienne pour la reconstruction de villes en trois dimensions ;
- l'aide au diagnostique médical ;
- l'analyse d'évènements sportifs ;
- l'aide à la décision pour des interventions militaires ou policières ;
- le guidage en robotique.

L'analyse des données vidéo nécessite une synchronisation des flux vidéo issus des différentes caméras. Par exemple, une reconstruction en trois dimensions de personnages ou d'objets n'est possible que lorsque l'on connaît de manière précise les dates des prises de vue de chaque image des différents flux vidéo. La synchronisation des différents flux vidéos consiste alors à aligner temporellement des séquences vidéo provenant de plusieurs caméras.

Différentes méthodes de synchronisation de flux vidéo peuvent être mises en oeuvre. La synchronisation peut notamment être faite de manière matérielle ou logicielle. La synchronisation matérielle s'appuie sur l'utilisation de circuits électroniques dédiés. La synchronisation logicielle utilise, quand a-elle, une analyse du contenu des images.

La synchronisation matérielle repose sur un contrôle très précis du déclenchement de chaque prise de vue par chaque caméra lors de l'acquisition, afin de réduire l'intervalle temporel entre des séquences vidéo correspondant à une même scène filmée au même instant par des caméras différentes.

Une première solution matérielle couramment mise en oeuvre utilise une connexion par un port possédant une interface série multiplexée suivant la norme IEEE 1394, interface communément appelée FireWire, marque déposée par la société Apple.

Des caméras, reliées entre elles par un bus de données et de commandes via leur port FireWire, peuvent être synchronisées de manière très précise. Cependant, le nombre de caméras ainsi connectées est limité par la capacité de débit du bus. Un autre inconvénient de cette synchronisation est qu'elle ne peut être mise en oeuvre sur tous les types de caméras.

Des caméras, connectées par l'intermédiaire de leur port FireWire à des bus séparés, peuvent être synchronisées par un synchroniseur de bus externe, développé spécifiquement pour des systèmes de caméras. Ce type de synchronisation est très précis, mais il peut être mis en oeuvre uniquement avec des caméras de même marque.

De manière générale, la synchronisation par port FireWire présente l'inconvénient d'être peu souple à mettre en oeuvre sur des équipements vidéos hétéroclites.

Une autre solution matérielle plus couramment mise en oeuvre utilise des ordinateurs afin de générer des impulsions de synchronisation à destination des caméras, chaque caméra étant reliée à un ordinateur. Le problème de mise en oeuvre de cette autre solution est de synchroniser les ordinateurs entre eux de manière précise. Cette synchronisation des ordinateurs entre eux peut :

- soit passer par le port parallèle des ordinateurs, tous les ordinateurs étant reliés entre eux par l'intermédiaire de leur port parallèle ;
- soit passer par un réseau, utilisant un protocole Ethernet, auquel sont reliés les ordinateurs.

Ethernet est un protocole de transmission de données par paquets, utilisé dans les réseaux locaux, qui permet d'atteindre différents débits pouvant varier selon le support de transmission employé. Dans les deux cas, un ordinateur maître envoie des impulsions de synchronisation aux ordinateurs esclaves reliés aux caméras. Dans le cas du réseau Ethernet, l'ordinateur maître est par exemple le serveur du réseau Ethernet, utilisant un protocole NTP ou Network Time Processing en langage anglo-saxon, signifiant protocole horaire en réseau. Le protocole NTP permet de synchroniser des horloges de systèmes informatiques à travers un réseau de transmission de données par paquets, dont la latence est variable.

Le principal inconvénient des solutions matérielles est autant d'ordre logistique que financier. En effet, ces solutions matérielles nécessitent de mettre en oeuvre une infrastructure, comme un réseau d'ordinateurs, coûteuse et complexe à implanter. En effet, les conditions d'utilisation des systèmes d'acquisition vidéo ne permettent pas toujours l'installation d'une telle infrastructure comme par exemple pour des caméras de surveillance urbaines : de nombreux systèmes d'acquisition sont déjà installés sans avoir prévu une place nécessaire pour un système de synchronisation. Il est alors difficile de synchroniser un déclenchement de l'ensemble des systèmes d'acquisitions présents qui peuvent par exemple être composés de réseaux de caméras hétérogènes.

De plus toutes les solutions matérielles nécessitent d'utiliser des systèmes d'acquisition pouvant être synchronisés de manière externe, ce qui n'est pas le cas pour des caméras grand public par exemple.

La synchronisation logicielle consiste notamment à effectuer un alignement temporel des séquences vidéos des différentes caméras. La plupart de ces méthodes utilisent la structure dynamique de la scène observée afin d'effectuer un alignement temporel des différentes séquences vidéo. Plusieurs solutions de synchronisation logicielle peuvent être mises en oeuvres.

Une première solution de synchronisation logicielle peut être nommée synchronisation par extraction d'un plan dans une scène. Une première méthode de synchronisation par extraction d'un plan dans une scène est notamment décrite dans le document : « Activities From Multiple Video Stream : Establishing a Common Coordinate Frame, IEEE Transactions on Pattern Recoginition and Machine Intelligence, Special Section on Video Surveillance and Monitoring, 22(8), 2000 » par Lily Lee, Raquel Romano, Gideon Stein. Cette première méthode détermine l'équation d'un plan formé par les trajectoires de tous les objets en mouvement dans la scène. Ce plan permet de relier toutes les caméras entre elles. Il s'agit ensuite de trouver une projection homographique dans le plan, des trajectoires obtenues par les différentes caméras, telle que l'erreur de projection homographique soit minimale. En effet, l'erreur de projection est minimale pour des points synchrones de trajectoire se correspondant dans deux flux vidéo. Un inconvénient de cette méthode est qu'il n'est pas toujours possible de trouver une projection homographique satisfaisant le critère de minimisation de l'erreur de projection. En effet, certains mouvements peuvent minimiser l'erreur de projection de l'homographie sans pour autant être synchrones. C'est le cas notamment pour des déplacements rectilignes à vitesse constante. Cette méthode manque donc de robustesse. D'autre part, le mouvement des objets doit s'effectuer sur un plan unique, ce qui limite le cadre d'utilisation de cette méthode à des environnements sensiblement plans.

Une amélioration de cette première solution de synchronisation est décrite par J. Kang, 1. Cohen, G. Medioni dans le document « Continuous muti-views traking using tensor voting, Proceeding of Workshop on Motion and Video Computing, 2002. pp 181-186 ». Cette amélioration utilise deux méthodes de synchronisation par extraction d'un plan dans une scène différentes selon qu'il soit possible ou non de déterminer l'homographie recherchée. Dans le cas où l'homographie ne peut être déterminée, une estimation de la synchronisation peut être effectuée en utilisant la géométrie épipolaire. La synchronisation entre deux caméras est alors obtenue par intersection des trajectoires appartenant à deux flux vidéo issus des deux caméras avec des droites épipolaires. Cette méthode de synchronisation nécessite une mise en correspondance précise des trajectoires, elle est donc peu robuste face à des occultations d'une partie des trajectoires. Cette méthode se base également sur un pré-calibrage des caméras, ce qui n'est pas toujours possible notamment lors de l'utilisation de flux vidéo issus de plusieurs caméras implantées en milieu urbain par exemple.

Une deuxième solution de synchronisation logicielle est une synchronisation par étude des trajectoires d'objets en mouvement dans une scène.

Une méthode de synchronisation par étude des trajectoires d'objets est décrite par Michal Irani dans le document « Sequence to sequence alignment, Pattern Analysis Machine Intelligence ». Cette méthode repose sur un appariement de trajectoires d'objets dans un couple de séquences vidéo désynchronisées. Un algorithme de type RANSAC, acronyme anglo-saxon pour Random Sample Consensus est notamment utilisé afin de sélectionner des paires de trajectoires candidates. L'algorithme RANSAC est notamment décrit par M. A. Fischler et R. C. Bolles dans le document « Random Sample Consensus: A Paradigm for Model Fitting with Applications to Image Analysis and Automated Cartography", Juin 1981. Les trajectoires mises en correspondance par appariement permettent d'estimer une matrice fondamentale de correspondance de ces trajectoires. La qualité de la matrice fondamentale est d'autant plus correcte que les trajectoires mises en correspondance sont synchrones. La synchronisation est alors obtenue par un algorithme itératif sur la qualité de la matrice fondamentale.

Cette méthode est très sensible à des occultations de certaines parties des trajectoires. Elle est donc peu robuste à une utilisation dans des milieux à forte concentration d'objets mobiles ou non. De plus la mise en correspondance de trajectoires issues de deux caméras n'est possible que si les deux caméras voient toutes deux l'ensemble de la trajectoire.

Une autre méthode de synchronisation par étude des trajectoires est décrite par Khutirumal dans le document « Vidéo frame alignement in multiple view ». Cette autre méthode consiste à suivre un point en mouvement dans une séquence filmée par une première caméra et d'effectuer une mise en correspondance de ce point le long d'une droite épipolaire correspondante dans une image de la séquence de la deuxième caméra.

Cette autre méthode s'avère peu robuste, notamment dans le cas où le point suivi disparaît au court du mouvement, on ne peut alors effectuer la mise en correspondance. De plus, cette autre méthode est très peu robuste au changement de luminosité dans la scène, ce qui peut s'avérer assez fréquent pour des caméras filmant en extérieur.

Une troisième solution de synchronisation logicielle est une synchronisation par étude de points singuliers des trajectoires des objets mobiles d'une scène. Cette solution est notamment décrite par A. Whitehead, R. Laganiere, P. Bose dans le document « Projective Space Temporal Synchronization of Multiple Video Sequences, Proceeding of IEEE Workshop on Motion and Video Computing, pp.132-137, 2005 ». Il s'agit de mettre en correspondance les points singuliers des trajectoires vues par les différentes caméras pour effectuer une synchronisation. Un point singulier peut être par exemple un point d'inflexion sur une trajectoire se retrouvant dans des vues issues des différentes caméras. Une fois les points d'intérêt détectés, une synchronisation entre les séquences provenant des différentes caméras est obtenue en calculant la distribution de corrélation de l'ensemble de ces points d'une séquence à l'autre.

Un des inconvénients de la troisième solution de synchronisation logicielle est que les points singuliers sont, de manière générale, difficiles à extraire. De plus, dans des cas particuliers comme des mouvements oscillatoires ou des mouvements rectilignes, les points singuliers sont respectivement trop nombreux ou inexistants. Cette méthode est donc peu efficace car elle dépend trop de la conformation des trajectoires. Les trajectoires ne peuvent en effet pas toujours être contraintes. C'est notamment le cas lorsque l'on filme une scène de rue par exemple.

Une quatrième solution de synchronisation logicielle est une synchronisation par étude des changements de luminosité. Une telle solution est décrite par Michal Irani dans le document « Sequence to sequence alignment, Pattern Analysis Machine Intelligence ». Cette solution procède à un alignement des séquences en fonction de leur variation de luminosité. Cette solution permet de s'affranchir de l'analyse d'objets en mouvement dans une scène qui peut par exemple en être dépourvue.

Cependant les capteurs des caméras sont plus ou moins sensibles aux variations lumineuses. De plus l'orientation des caméras modifie également la perception des variations lumineuses. Cette quatrième solution est donc peu robuste lorsqu'elle est utilisée dans un milieu où la luminosité de la scène n'est pas maîtrisée. Cette quatrième solution nécessite également un calibrage fin de la colorimétrie des caméras, ce qui n'est pas toujours possible avec des caméras miniaturisées basiques.

JP-A-2006 228 144 divulgue une autre solution de synchronisation logicielle.

De manière générale, les solutions logicielles connues présentent des résultats peu robustes notamment face à des occultations d'objets au cours de leurs déplacements ou nécessitent une configuration complexe voir impossible sur certains types de caméras.

Un principe général de l'invention est de tenir compte de la géométrie de la scène filmée par plusieurs caméras pour mettre en correspondance des images synchrones issues de différentes caméras par un appariement dans un domaine fréquentiel ou spatial.

A cet effet, l'invention, qui est définie dans la revendication 1, a pour objet un procédé de synchronisation d'au moins deux flux vidéo provenant d'au moins deux caméras ayant un champ de vision commun. Le procédé comporte au moins les étapes suivantes :

- acquisition des flux vidéo et enregistrement des images composant chaque flux vidéo sur un support d'enregistrement vidéo ;
- rectification des images des flux vidéo selon des lignes épipolaires ;
- pour chaque ligne épipolaire des flux vidéo : extraction d'une ligne épipolaire dans chaque image rectifiée de chaque flux vidéo ; pour chaque flux vidéo, l'ensemble des lignes épipolaires extraites de chaque image rectifiée compose par exemple une image d'une ligne épipolaire temporelle ;
- pour chaque ligne épipolaire des flux vidéo : calcul d'une valeur de décalage temporel $\delta$ entre les flux vidéo, par mise en correspondance des images d'une ligne épipolaire temporelle de chaque flux vidéo ;
- calcul d'une valeur de désynchronisation temporelle $D_t$ entre les flux vidéo en prenant notamment en compte les valeurs de décalage temporel $\delta$ calculées pour chaque ligne épipolaire des flux vidéo ;
- synchronisation des flux vidéo à partir de la valeur de désynchronisation temporelle $D_t$ calculée.

La mise en correspondance peut être effectuée par une corrélation des images d'une ligne épipolaires temporelle pour chaque ligne épipolaire, dans un domaine fréquentiel.

Une corrélation de deux images d'une ligne épipolaire temporelle peut comporter au moins les étapes suivantes :

■ calcul des gradients en temps d'une première et d'une deuxième image d'une ligne épipolaire temporelle, la première et la deuxième image de la ligne épipolaire temporelle provenant de deux flux vidéo ;
■ calcul d'une transformée de Fourier des gradients en temps de la première et de la deuxième image de la ligne épipolaire temporelle ;

■ calcul du conjugué complexe du résultat de la transformée de Fourier du gradient en temps de la première image de la ligne épipolaire temporelle ;

■ calcul du produit du conjugué complexe et du résultat de la transformée de Fourier du gradient en temps de la deuxième image de la ligne épipolaire temporelle ;

■ calcul d'une matrice de corrélation par un calcul de transformée de Fourier inverse du résultat du produit calculé au cours de l'étape précédente ;

■ calcul de la valeur de décalage temporel δ entre les deux flux vidéo par analyse de la matrice de corrélation.

La mise en correspondance peut être effectuée par une corrélation des images d'une ligne épipolaire temporelle pour chaque ligne épipolaire, dans un domaine spatial.

Une corrélation de deux images d'une ligne épipolaire temporelle dans un domaine spatial peut utiliser un calcul d'une fonction de vraisemblance entre les deux images de la ligne épipolaire temporelle.

Une corrélation de deux images de la ligne épipolaire temporelle sélectionnée peut être réalisée par une décomposition en ondelettes des deux images de la ligne épipolaire temporelle.

La valeur de désynchronisation temporelle $D_t$ peut être calculée en prenant par exemple une valeur médiane des valeurs de décalage temporel δ calculées pour chaque ligne épipolaire.

Les fréquences d'acquisition des différents flux vidéo étant par exemple différentes, des images intermédiaires, par exemple créées par une interpolation des images les précédant et les suivant dans les flux vidéo, complètent les flux vidéo de plus basse fréquence jusqu'à atteindre une fréquence sensiblement identique à celle des flux vidéo de plus haute fréquence.

L'invention a notamment pour principaux avantages : d'être applicable à une synchronisation d'un nombre de caméras supérieur ou égal à deux et de permettre une reconstruction en trois dimensions en temps réel d'une scène filmée par des caméras. Cette méthode est également applicable à tout type de caméras et permet une synchronisation logicielle automatique des séquences vidéo.

D'autres caractéristiques et avantages de l'invention apparaîtront à l'aide de la description qui suit, donnée à titre illustratif et non limitatif, et faite en regard des dessins annexés qui représentent :

- la figure 1 : une séquence d'images vidéo ;
- la figure 2 : une mise en correspondance temporelle d'images issues de deux séquences d'images vidéo ;
- la figure 3 : un exemple de rectification épipolaire de deux images ;
- la figure 4 : un exemple d'extraction d'une ligne épipolaire dans des volumes d'images rectifiées selon l'invention ;
- la figure 5 : différentes étapes possibles d'un algorithme de mise en correspondance d'images de lignes épipolaires temporelles dans le domaine fréquentiel selon l'invention ;
- la figure 6 : un exemple de mise en correspondance de deux images de lignes épipolaires temporelles dans le domaine fréquentiel par l'obtention d'une image de corrélation ;
- la figure 7 : un exemple de mise en correspondance d'images de lignes épipolaires temporelles dans le domaine fréquentiel pour deux décalages temporels différents ;
- la figure 8 : différentes étapes possibles du procédé de synchronisation de flux vidéo selon l'invention.

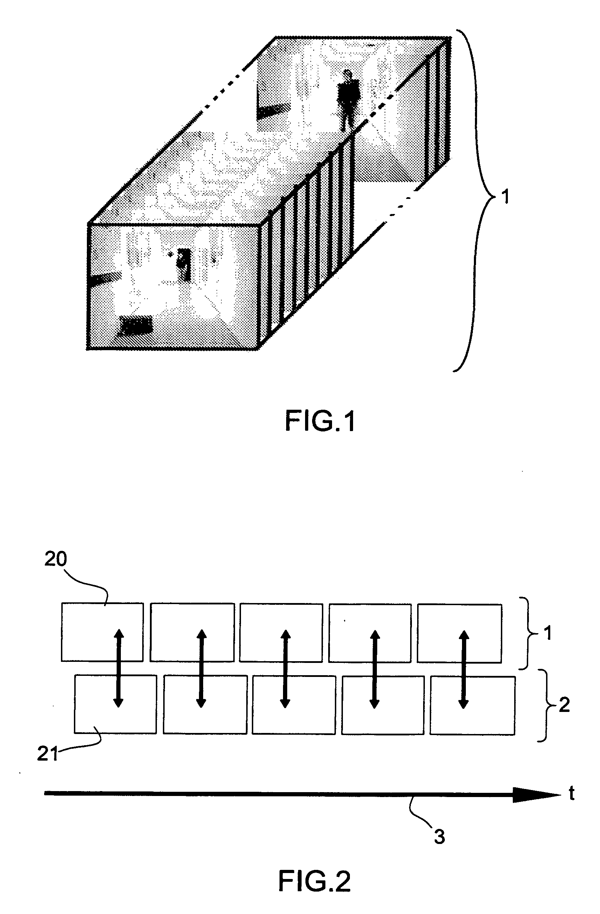

La figure 1 représente une première séquence vidéo 1 issue d'une première caméra filmant une scène. La première séquence vidéo est par exemple une suite d'images acquises à intervalles réguliers dans le temps par la première caméra. La première caméra peut être du type caméra à projection centrale comme les caméras perspectives, les caméras avec ou sans distorsion ou les systèmes catadioptriques. La première caméra peut également être une caméra à projection non centrale comme les systèmes catadioptriques basés sur un miroir sphérique.

La présente invention s'applique à réaliser une synchronisation logicielle d'au moins deux séquences vidéo issues d'au moins deux caméras. Les deux caméras peuvent être de types différents. L'application de l'invention ne se limite pas à la synchronisation de deux caméras, elle est également applicable à la synchronisation d'un nombre n de flux vidéo ou séquences vidéo issues d'un nombre n de caméras, n étant supérieur ou égal à deux. Cependant pour simplifier la description de l'invention, on ne s'intéressera dans la suite qu'à deux caméras. Les deux caméras à synchroniser au moyen de l'invention observent globalement une même scène. En effet, il est nécessaire que qu'une partie de chaque scène observée par chaque caméra soit commune aux deux caméras. La taille de la partie commune observée par les deux caméras n'est pas déterminante pour l'application de l'invention, dès l'instant où elle est non vide.

La figure 2 représente un principe général d'une synchronisation logicielle de deux séquences vidéos 1, 2, ou flux vidéo 1, 2, par exemple numériques. Une première séquence vidéo 1 est issue d'une première caméra, et une deuxième séquence vidéo peut être issue d'une deuxième caméra. De manière générale, les deux caméras sont des capteurs vidéo. La synchronisation logicielle s'applique à recaler temporellement chaque image acquise par un réseau de caméras selon un même axe temporel 3. Par exemple sur la figure 2, la synchronisation temporelle des flux vidéo 1, 2 permet de mettre en correspondance une première image 20 de la première séquence vidéo 1 avec une deuxième image 21 de la deuxième séquence vidéo 2. La deuxième image 21 représente la même scène que la première image 20 vue par exemple sous un angle différent. La première image 20 et la deuxième image 21 correspondent donc à un même instant de prise de vue.

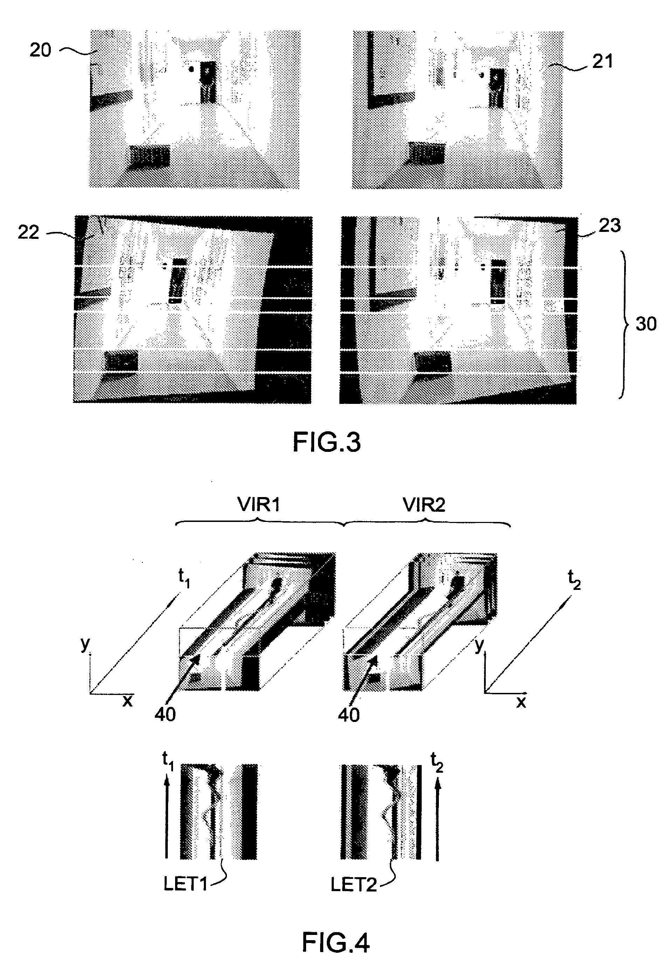

La figure 3 représente un exemple de rectification d'images. L'invention est un procédé logiciel de synchronisation d'images dont la première étape est notamment une mise en correspondance des images des deux flux vidéo 1, 2. La mise en correspondance des deux images originales 20, 21 des flux vidéo 1, 2 peut utiliser une rectification épipolaire des deux images originales 20, 21. Une rectification épipolaire de deux images est une correction géométrique des deux images originales 20, 21 de façon à aligner géométriquement tous les pixels de la première image originale 20 par rapport aux pixels correspondants dans la deuxième image originale 21. Ainsi, une fois les deux images originales 20, 21 rectifiées, chaque pixel de la première image originale 20 et le pixel lui correspondant dans la deuxième image originale 21 sont sur une même ligne. Cette même ligne est une ligne épipolaire. Deux pixels de deux images originales 20, 21 différentes se correspondent lorsqu'ils représentent une projection dans un plan image d'un même point en trois dimensions de la scène filmée. La figure 3 représente d'une part les deux images originales 20, 21 et d'autre part les deux images rectifiées 22, 23 selon les lignes épipolaires 30. Les deux images rectifiées 22, 23 sont notamment obtenues par la mise en correspondance des pixels de la première image originale 20 avec les pixels de la deuxième image originale 21. Sur la figure 3, pour l'exemple, cinq lignes épipolaires 30 sont représentées.

La rectification épipolaire des images provenant de deux caméras différentes permet de connaître un calibrage faible des deux caméras. Un calibrage faible permet d'estimer la géométrie relative des deux caméras. Le calibrage faible est donc déterminé par une mise en correspondance d'un ensemble de pixels de chaque image originale 20, 21 comme décrit précédemment. Cette mise en correspondance peut être : automatique ou manuelle, en utilisant une méthode de calibrage par mire par exemple, selon la nature de la scène observée. Deux pixels en correspondance entre deux images originales 20, 21 satisfont la relation suivante :

$$x'^t F x = 0 \qquad\qquad (100)$$

dans laquelle, F est une matrice fondamentale représentative du calibrage faible des deux caméras, $x^t$ est par exemple la transposée du vecteur de coordonnées cartésiennes d'un premier pixel dans le plan de la première image originale 20, x est par exemple le vecteur de coordonnées cartésiennes du deuxième pixel correspondant dans le plan de la deuxième image originale 21. La relation (100) est expliquée plus en détail par Richard Hartley et Andrew Zisserman dans l'ouvrage : « Multiple View Geometry, second edition ».

De nombreuses méthodes existantes permettent d'estimer la matrice fondamentale F notamment à partir de points rigides mis en correspondance d'une caméra à l'autre. Un point rigide est un point fixe d'une image à l'autre dans un flux vidéo donné.

Tout d'abord, afin de s'assurer que les points rigides sélectionnés ne font pas partie d'objets en mouvement, le fond statique de l'image est extrait. Ensuite les points rigides sont choisis à partir du fond statique de l'image extrait. La matrice fondamentale est ensuite estimée à partir des images de fond statique extraites. L'extraction du fond statique de l'image peut être effectuée selon une méthode décrite par Qi Zang et Reinhard Klette dans le document « Evaluation of an Adaptive Composite Gaussian Model in Video Surveillance ». Cette méthode permet de caractériser un point rigide dans une scène par un modèle Gaussien temporel. Ceci permet donc d'extraire une carte de pixels, dite rigide, d'une image. On applique ensuite à cette carte rigide des algorithmes de structure et de mouvement qui permettent :

- de détecter et de décrire des points caractéristiques rigides dans la scène ;
- de mettre en correspondance les points caractéristiques rigides dans deux images de deux flux vidéo ;
- d'estimer une matrice fondamentale par des méthodes algébriques robustes comme l'algorithme RANSAC ou la méthode des moindres carrés médians associée à un M-estimateur.

Le calibrage faible de deux caméras peut également être obtenu en utilisant une mire caractéristique dans la scène filmée. Cette méthode de calibrage faible peut être utilisée dans des cas où la méthode précédemment décrite ne donne pas de résultats satisfaisants.

La rectification d'images présente la particularité suivante : tout pixel représentant une partie d'un objet en mouvement dans la première image originale 20 du premier flux vidéo 1 est sur la même ligne épipolaire 30 que le pixel correspond dans la deuxième image originale 21 du deuxième flux vidéo 2 lorsque les deux images sont synchrones. Par conséquent, si un objet en mouvement passe à un instant t sur une ligne épipolaire de la première image originale 20 de la première caméra, il traversera la même ligne épipolaire 30 dans la deuxième image originale 21 de la deuxième caméra lorsque la première et la deuxième image originale 20, 21 seront synchronisées. Le procédé selon l'invention utilise judicieusement cette particularité afin d'effectuer une synchronisation de deux séquences vidéos en analysant les variations de manière comparée entre les deux flux vidéo 1, 2 des lignes épipolaires 30 dans les différentes images des flux vidéos 1, 2. Les variations des lignes épipolaires 30 sont par exemple des variations dans le temps de l'intensité de l'image sur les lignes épipolaires 30. Ces variations d'intensité sont par exemple dues à des objets en mouvement dans la scène. Les variations des lignes épipolaires 30 peuvent également être des variations de luminosité de l'image sur la ligne épipolaire 30.

Le procédé selon l'invention comporte donc une étape de rectification de l'ensemble des images des deux flux vidéo 1, 2. Cette rectification revient à déformer toutes les images originales des deux flux vidéos 1, 2 en fonction de la matrice fondamentale de façon à rendre parallèle les lignes épipolaires 30. Pour rectifier les images originales, on peut par exemple utiliser une méthode décrite par D. Oram dans le document : « Rectification for Any Epipolar Geometry ».

La figure 4 représente un exemple d'extraction selon l'invention d'une ligne épipolaire 40 dans les deux flux d'images vidéo 1, 2, une fois les images rectifiées. Une image d'une ligne épipolaire temporelle, nommée image épipolaire par la suite, est une image LET1, LET2 formée par l'assemblage temporel, dans l'ordre chronologique de la prise de vue, des pixels d'une même ligne épipolaire 40 extraite de chaque image rectifiée 22, 23 de chaque flux vidéo 1, 2. L'ensemble des images rectifiées 22, 23 d'un flux vidéo 1, 2 est aussi nommé volume d'images rectifiées. Le volume d'images rectifiées du premier flux vidéo 1 est le premier volume d'images rectifiées VIR1 représenté sur la figure 4. De la même manière, le volume d'images rectifiées du deuxième flux vidéo 2 est le deuxième volume d'images rectifiées VIR2 représenté sur la figure 4. Les images rectifiées 22, 23 des volumes d'images rectifiées VIR1, VIR2 sont temporellement ordonnées dans l'ordre chronologique de la prise de vue par exemple. Le premier volume d'images rectifiées VIR1 est donc orienté selon un premier axe temporel $t_1$ et le deuxième volume d'images rectifiées VIR2 est orienté selon un deuxième axe temporel $t_2$ différent de $t_1$. En effet, les volumes d'images rectifiées VIR1, VIR2 ne sont pas encore synchronisés, ils ne suivent donc pas le même axe temporel $t_1$, $t_2$. Une image épipolaire LET1, LET2 est obtenue par un découpage d'un volume d'images rectifiées VIR1, VIR2 selon un plan défini par la ligne épipolaire 40 et sensiblement parallèle à un premier axe horizontal x, le plan étant sensiblement perpendiculaire à un deuxième axe vertical y. Le deuxième axe vertical y est sensiblement perpendiculaire au premier axe x. Une première image épipolaire LET1 est ainsi obtenue à partir du premier volume d'images rectifiées VIR1. La première image épipolaire LET1 est donc obtenue en effectuant une coupe du premier volume d'images rectifié VIR1 selon la ligne épipolaire 40 perpendiculairement au deuxième axe vertical y. De la même manière, une deuxième image épipolaire LET2 est obtenue en effectuant une coupe du deuxième volume d'images rectifiées VIR2 selon la ligne épipolaire 40, perpendiculairement au deuxième axe vertical y.

Les images épipolaires LET1, LET2 permettent d'étudier l'évolution de la ligne épipolaire 40 dans le temps pour chaque flux vidéo 1, 2. L'étude de l'évolution des lignes épipolaires temporelles permet de mettre en correspondance les traces laissées dans les images des flux vidéos 1, 2 par des objets en mouvement dans la scène filmée.

Afin d'effectuer une synchronisation des deux séquences vidéo 1, 2, une extraction de chaque ligne épipolaire 30 dans chaque image des deux volumes d'images rectifiées VIR1, VIR2 est effectuée. On obtient donc autant de couple d'images épipolaires (LET1, LET2) qu'il y a de ligne épipolaire dans une image. Par exemple on peut extraire une image épipolaire par ligne de pixels comportant des informations dans une image rectifiée 22, 23.

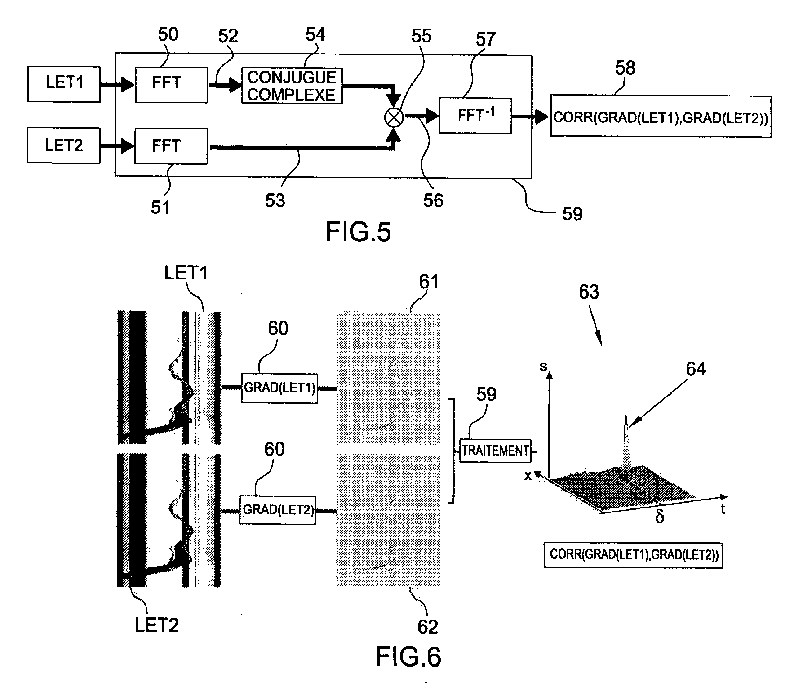

La figure 5 représente un exemple d'un algorithme de mise en correspondance des images épipolaires LET1, LET2 dans le domaine fréquentiel, selon l'invention

L'algorithme de mise en correspondance des images épipolaires LET1, LET2 peut utiliser un traitement à base de transformées de Fourier 59.

Une transformée de Fourier discrète, ou FFT, 50, 51 est appliquée sur un gradient en temps de chaque image épipolaire LET1, LET2. Ceci permet de s'affranchir du fond de la scène. En effet, un gradient en temps appliqué à chaque image épipolaire LET1, LET2 revient à dériver temporellement les images épipolaires LET1, LET2 et permet de faire ainsi apparaître uniquement les contours des mouvements des objets en déplacement dans la scène filmée. Le gradient en temps d'une image épipolaire est noté GRAD(LET1), GRAD(LET2). Une première transformée de Fourier 50 appliquée au premier gradient en temps GRAD(LET1) de la première image épipolaire LET1 donne un premier signal 52. Une deuxième transformée de Fourier 51 appliquée au deuxième gradient en temps GRAD(LET2) de la deuxième image épipolaire LET2 donne un deuxième signal 53. Ensuite, on fait un produit 55 du deuxième signal 53 avec un complexe conjugué 54 du premier signal 52. Le résultat du produit 55 est un troisième signal 56. On applique ensuite sur le troisième signal 56 une transformée de Fourier inverse 57. Le résultat de la transformée de Fourier inverse 57 est une première matrice de corrélation 58 CORR(GRAD(LET1),GRAD(LET2)).

La figure 6 représente des images obtenues à différentes étapes de la mise en correspondance des deux images épipolaires LET1, LET2 dans le domaine fréquentiel. L'application d'un gradient en temps 60 sur les images épipolaires LET1, LET2, donne deux images de gradient 61, 62. La première image de gradient 61 est obtenue en prenant un premier gradient en temps GRAD(LET1) de la première image épipolaire LET1. La deuxième image de gradient 62 est obtenue en prenant un deuxième gradient en temps GRAD(LET2) de la deuxième image épipolaire LET2. Le traitement en transformé de Fourier 59 représenté plus en détail sur la figure 5 est donc appliqué sur les deux images de gradient 61, 62. La première matrice de corrélation CORR(GRAD(LET1),GRAD(LET2)), obtenue en sortie du traitement 59, peut être représentée sous la forme d'une image de corrélation 63. L'image de corrélation 63 peut être représentée sous la forme d'une image en trois dimensions (x, t, s), où x représente le premier axe horizontal x, t un troisième axe temporel, et s un quatrième axe représentant un score de corrélation. Un décalage temporel $\delta$ entre deux images épipolaires LET1, LET2 se mesure sur le troisième axe temporel t. En effet, pour un décalage temporel t=$\delta$, on observe sur l'image de corrélation 63 un pic de corrélation 64. Le pic de corrélation 64 se traduit sur l'image de corrélation 63 par une valeur élevée du score de corrélation pour t=$\delta$. Le pic de corrélation 64 correspond au décalage optimal entre les traces laissées par les objets en mouvement.

Chaque couple d'image épipolaire (LET1, LET2), extrait des volumes d'images rectifiées VIR1, VIR2, permet donc d'estimer un décalage temporel $\delta$ entre les deux flux vidéo 1, 2.

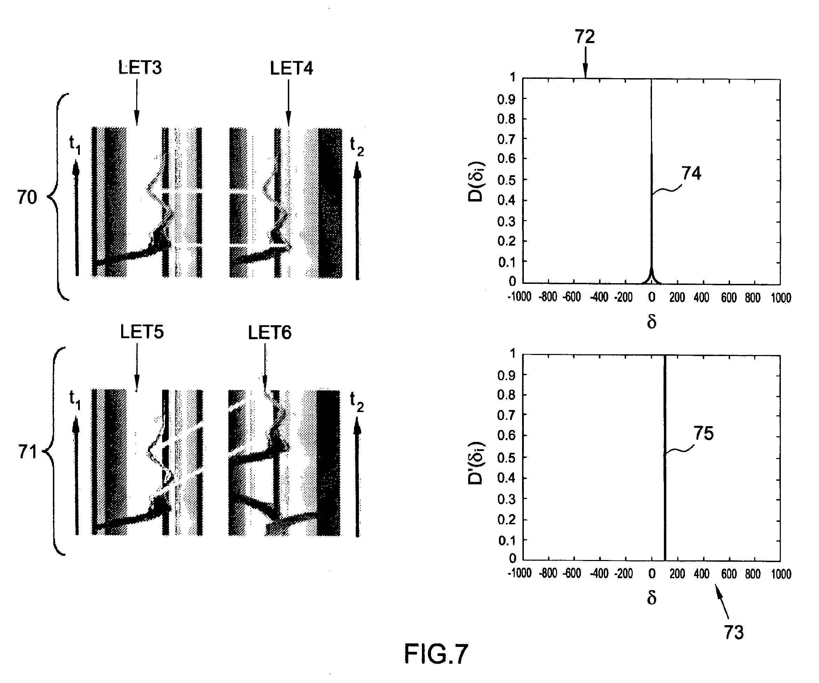

La figure 7 représente deux exemples 70, 71 de mise en correspondance de flux vidéo ayant un décalage temporel différent, selon l'invention.

Un premier exemple 70 représente un premier couple d'images épipolaires (LET3, LET4) parmi n couples d'images épipolaires venant d'un deuxième et d'un troisième flux vidéo. A partir de chaque couple d'images épipolaires, en appliquant le traitement 59 sur les gradients de chaque image épipolaire GRAD(LET3), GRAD(LET4) par exemple, on obtient une matrice de corrélation CORR(GRAD(LET3), GRAD(LET4)) par exemple. De manière générale, on peut noter que :

$$\text{CORR}_i = \text{FFT}^{-1}(\text{FFT}(\text{GRAD}(\text{LET}i_1) \times \text{FFT}^*(\text{GRAD}(\text{LET}i_2))) \quad (101)$$

Où i est un indice d'un couple d'images épipolaires parmi n couples d'images épipolaires, $\text{LET}i_1$ est une ième image épipolaire du deuxième flux vidéo, $\text{LET}i_2$ est une ième image épipolaire d'un troisième flux vidéo.

Après le calcul de l'ensemble des images de corrélation $\text{CORR}_i$ pour les n couples d'images épipolaires (LET3, LET4) du deuxième et du troisième flux vidéo, on obtient un ensemble de n décalages temporels $\delta_i$. Il existe donc un décalage temporel $\delta_i$ par couple d'images épipolaires (LET3, LET4). Sur premier graphique 72, une distribution $D(\delta_i)$ des décalages temporels $\delta_i$ selon les valeurs t de $\delta_i$ est représentée. Cette distribution $D(\delta_i)$ permet de calculer une désynchronisation temporelle $D_t$ en nombre d'images par exemple entre le troisième et le quatrième flux vidéo par exemple. $D_t$ est par exemple obtenue de la manière suivante :

$$D_t = median_{i=1}^{n}(\delta_i) \quad (102)$$

où *median* est la fonction médiane. $D_t$ est donc une valeur médiane des décalages temporels $\delta_i$.

Sur le premier graphique 72, la valeur médiane $D_t$ est représentée par un premier pic 74 de la première distribution $D(\delta_i)$. Le premier pic 74 apparaît pour une valeur de t nulle, les troisième et quatrième flux vidéo sont donc synchronisés, en effet dans ce cas la désynchronisation temporelle $D_t$ vaut zéro images.

Sur un deuxième exemple 71, une troisième matrice de corrélation CORR(GRAD(LET5),GRAD(LET6)) est obtenue par le traitement 59 appliqué à un gradient temporel des images épipolaires d'un deuxième couple d'images épipolaires (LET5, LET6) issu d'un cinquième et d'un sixième flux vidéo. En calculant les images de corrélation relatives à l'ensemble des couples d'images épipolaire issus des cinquième et sixième flux vidéo, on obtient, de la même manière que dans le premier exemple 70, un deuxième graphique 73. Le deuxième graphique 73 présente en abscisse le décalage temporel $\delta$ entre les deux flux vidéo et en ordonnée une deuxième distribution $D'(\delta_i)$ des valeurs de décalages temporels $\delta_i$ obtenue d'après les matrices de corrélation calculée. Sur le deuxième graphique 73, un deuxième pic 75 apparaît pour une valeur de $\delta$ valant cent. Cette valeur correspond par exemple à une désynchronisation temporelle $D_t$ entre les cinquième et sixième flux vidéo équivalent à cent images.

La désynchronisation temporelle $D_t$ calculée est donc fonction de l'ensemble des images épipolaires extraites de chaque volume d'images rectifiées de chaque flux vidéo.

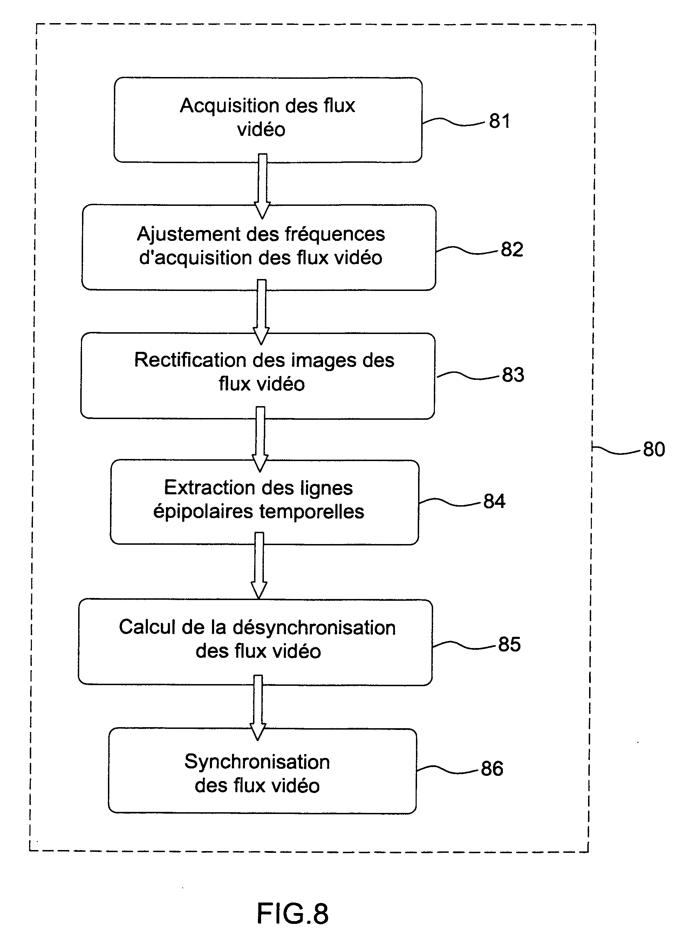

La figure 8 représente plusieurs possibles étapes 80 du procédé de synchronisation de flux vidéo 1,2 selon l'invention.

Une première étape 81 est une étape d'acquisition de séquences vidéo 1, 2 par deux caméras vidéo. Les séquences vidéo 1, 2 acquises peuvent être enregistrées sur un support numérique par exemple comme un disque dur, un compact disque, ou sur une bande magnétique. Le support d'enregistrement étant adapté à l'enregistrement d'images de flux vidéo.

Une deuxième étape 82 est une étape optionnelle d'ajustement des fréquences de prise de vue si les deux flux vidéo 1, 2 n'ont pas la même fréquence d'échantillonnage du signal vidéo. Un ajustement des fréquences d'échantillonnage peut se faire en ajoutant des images dans le flux vidéo ayant la fréquence d'échantillonnage la plus importante, jusqu'à obtenir la même fréquence d'échantillonnage pour les deux flux vidéo 1, 2. Une image ajoutée entre deux images d'une séquence vidéo peut être calculée par interpolation de l'image précédente et de l'image suivante. Une autre méthode peut utiliser une ligne épipolaire afin d'interpoler une nouvelle image à partir d'une image précédente dans la séquence vidéo.

Une troisième étape 83 est une étape de rectification des images de chaque flux vidéo 1, 2. Un exemple de rectification d'images est notamment représenté sur la figure 3.

Une quatrième étape 84 est une étape d'extraction des lignes épipolaires temporelles de chaque flux vidéo 1, 2. L'extraction des lignes épipolaires temporelles est notamment représentée sur la figure 4. Dans chaque flux vidéo, l'ensemble des lignes épipolaires 30 sont extraites. On peut extraire par exemple une ligne épipolaire temporelle par ligne de pixels d'une image de flux vidéo.

Une cinquième étape 85 est une étape de calcul de la désynchronisation entre les deux flux vidéo 1, 2. Le calcul de la désynchronisation entre les deux flux vidéo 1, 2 revient a effectuer une mise en correspondance des couples d'images de chaque ligne épipolaire temporelle extraite des deux flux vidéo 1, 2 comme la première et la deuxième image épipolaire LET1, LET2. Cette mise en correspondance peut s'effectuer dans le domaine fréquentiel comme décrit précédemment en utilisant un traitement de transformées de Fourier 59. Une mise en correspondance de deux images épipolaires peut également être réalisée en utilisant une technique de décomposition en ondelettes des images épipolaires.

Une mise en correspondance de chaque couple d'images épipolaires (LET1, LET2) peut se faire également dans le domaine spatial. Par exemple, pour un couple d'images épipolaires (LET1, LET2), une première étape de mise en correspondance dans le domaine spatial permet un calcul d'une fonction principale représentant des rapports de corrélation entre les deux images épipolaires. Une fonction principale représentant des rapports de corrélation est une fonction probabiliste donnant une estimation, pour un premier jeu de données, de sa ressemblance avec un deuxième jeu de données. La ressemblance est, dans ce cas, calculée pour chaque ligne de données de la première image épipolaire LET1 avec toutes les lignes de la deuxième image épipolaire LET2 par exemple. Une telle mesure de ressemblance, également appelée mesure de vraisemblance, permet d'obtenir directement une mise en correspondance temporelle entre les séquences dont sont issues le couple d'images épipolaires (LET1, LET2).

Selon un autre mode de réalisation, une mise en correspondance de deux images épipolaires LET1, LET2 peut être réalisée en utilisant une méthode selon l'art antérieur comme une étude de points singuliers.

Une fois la mise en correspondance réalisée, la valeur obtenue pour la désynchronisation temporelle entre les deux flux vidéo 1, 2, ces derniers sont synchronisés selon des méthodes classiques au cours d'une sixième étape 86.

Le procédé selon l'invention a pour avantage de permettre une synchronisation de flux vidéo pour des caméras produisant des flux vidéo ayant un champ de vision commun réduit. Il suffit, pour que le procédé selon l'invention soit efficace, que les parties communes entre les champs de vision des caméras soient non nulles.

Le procédé selon l'invention synchronise avantageusement des flux vidéo, même en présence d'une occultation partielle du mouvement filmé par les caméras. En effet, le procédé selon l'invention analyse les mouvements des images dans leur globalité.

Pour la même raison, le procédé selon l'invention est avantageusement efficace en présence de mouvements de faibles amplitudes d'objets rigides ou non situés dans le champ des caméras, un objet non rigide étant un corps mou déformable.

De même, le procédé selon l'invention est avantageusement applicable à une scène comportant des éléments de grande échelle ainsi que des éléments réfléchissants, comme des surfaces métalliques.

Le procédé selon l'invention est avantageusement efficace même en présence de changements de luminosité. En effet, l'utilisation d'une synchronisation fréquentielle des images des lignes épipolaires temporelles supprime les différences de luminosité entre deux images d'une même ligne épipolaire temporelle.

La corrélation des images de lignes épipolaires temporelle effectuée dans le domaine fréquentiel est avantageusement robuste au bruit présent dans les images. De plus le temps de calcul est indépendant du bruit présent dans l'image, en effet, la méthode traite les images dans leur globalité sans chercher à caractériser des zones particulières dans l'image. Le signal vidéo est donc traité dans son intégralité.

Avantageusement, l'utilisation par le procédé selon l'invention d'une mise en correspondance de toutes les traces laissées par des objets en mouvement sur les lignes épipolaires est une méthode fiable : cette méthode ne contraint pas la nature de la scène filmée. En effet, cette méthode est indifférente à la taille des objets, aux couleurs, aux occultations de la scène comme des arbres, ou aux textures différentes. Avantageusement la corrélation des traces temporelles est également une méthode robuste.

Le procédé selon l'invention est avantageusement peu coûteux en temps de calcul. Il permet ainsi d'effectuer des traitements de flux vidéo en temps réel. Notamment, la corrélation effectuée dans le domaine fréquentiel à l'aide des transformées de Fourier permet un calcul temps réel. Le procédé selon l'invention peut avantageusement être appliqué en post-traitement de flux vidéos ou en traitement direct.

Les flux vidéos ayant une forte désynchronisation, par exemple milles images, sont efficacement traités par le procédé selon l'invention. En effet, le procédé est indépendant du nombre d'images à traiter dans un flux vidéo.

**Revendications**

1. Procédé de synchronisation d'au moins deux flux vidéo (1, 2), chaque flux vidéo provenant d'au moins une caméra différente, les caméras ayant un champ de vision commun, **caractérisé en ce qu'**il comporte au moins les étapes suivantes :

   • acquisition (81) des flux vidéo (1, 2) sous forme d'une suite d'images (20, 21) composant chaque flux vidéo (1, 2) ;
   • rectification (83) des images (20, 21) des flux vidéo (1, 2) selon des lignes épipolaires (30) ;
   • pour chaque ligne épipolaire (30) des flux vidéo (1, 2) : extraction (84) de la ligne épipolaire (40) dans chaque image rectifiée (22, 23) de chaque flux vidéo (1, 2) ; pour chaque flux vidéo (1, 2), assemblage des lignes épipolaires extraites (40) de chaque image rectifiée (22, 23), ledit assemblage composant une image d'une ligne épipolaire temporelle (LET1 , LET2, LET3, LET4, LET5, LET 6) ;
   • pour chaque ligne épipolaire (30) des flux vidéo (1, 2) : calcul d'une valeur de décalage temporel δ entre les flux vidéo (1, 2) par mise en correspondance des images d'une ligne épipolaire temporelle (LET1, LET2, LET3, LET4, LET5, LET 6) de chaque flux vidéo (1, 2) ;
   • calcul (85) d'une valeur de désynchronisation temporelle $D_t$ entre les flux vidéo (1, 2) en prenant en compte les valeurs de décalage temporel δ calculées pour chaque ligne épipolaire (30) des flux vidéo (1, 2);
   • synchronisation (86) des flux vidéo (1, 2) à partir de la valeur de désynchronisation temporelle $D_t$ calculée.

2. Procédé selon la première revendication, **caractérisé en ce que** la mise en correspondance (85) est effectuée par une corrélation des images d'une ligne épipolaire temporelle (LET1, LET2, LET3, LET4, LET5) pour chaque ligne épipolaire (30), dans un domaine fréquentiel.

3. Procédé selon la revendication 2, **caractérisé en ce qu'**une corrélation de deux images (LET1, LET2) d'une ligne épipolaire temporelle (40) comporte au moins les étapes suivantes :

   ■ calcul des gradients en temps (60) d'une première et d'une deuxième image d'une ligne épipolaire temporelle (LET1, LET2), la première et la deuxième image de la ligne épipolaire temporelle (LET1, LET2) provenant de deux flux vidéo (1, 2);
   ■ calcul d'une transformée de Fourier (50, 51) des gradients en temps (60) de la première et de la deuxième image de la ligne épipolaire temporelle (LET1, LET2) ;
   ■ calcul du conjugué complexe (54) du résultat de la transformée de Fourier (52) du gradient en temps (60) de la première image de la ligne épipolaire temporelle (LET1) ;
   ■ calcul du produit (55) du conjugué complexe (54) et du résultat de la transformée de Fourier (53) du gradient en temps (60) de la deuxième image de la ligne épipolaire temporelle (LET2) ;
   ■ calcul d'une matrice de corrélation (58) par un calcul de transformée de Fourier inverse (57) du résultat du produit (55) calculé au cours de l'étape précédente ;
   ■ calcul de la valeur de décalage temporel δ entre les deux flux vidéo (1,2) par analyse de la matrice de corrélation (58).

4. Procédé selon la première revendication, **caractérisé en ce que** la mise en correspondance (85) est effectuée par une corrélation des images d'une ligne épipolaire temporelle (LET1, LET2, LET3, LET4, LET5) pour chaque ligne épipolaire (30), dans un domaine spatial.

5. Procédé selon la revendication 4, **caractérisé en ce qu'**une corrélation de deux images d'une ligne épipolaire temporelle (LET1, LET2) dans un domaine spatial utilise un calcul d'une fonction de vraisemblance entre les deux images de la ligne épipolaire temporelle (LET1, LET2).

6. Procédé selon la première revendication, **caractérisé en ce qu'**une corrélation de deux images (LET1, LET2) de la ligne épipolaire temporelle sélectionnée (40) est réalisée par une décomposition en ondelettes des deux images (LET1, LET2) de la ligne épipolaire temporelle (40).

7. Procédé selon l'une quelconque des revendications précédentes, **caractérisé en ce que** la valeur de désynchro-

nisation temporelle $D_t$ est calculée en prenant une valeur médiane des valeurs de décalage temporel $\delta$ calculées pour chaque ligne épipolaire (30).

8. Procédé selon l'une quelconque des revendications précédentes, **caractérisé en ce que** les fréquences d'acquisition des différents flux vidéo (1, 2) étant différentes, des images intermédiaires, créées par une interpolation des images les précédant et les suivant dans les flux vidéo (1,2), complètent les flux vidéo (1, 2) de plus basse fréquence jusqu'à atteindre une fréquence sensiblement identique à celle des flux vidéo de plus haute fréquence.

**Claims**

1. A process for synchronising at least two video streams (1, 2), each video stream originating from at least one different camera, the cameras having a common field of vision, **characterised in that** it comprises at least the following steps:

   • acquiring (81) the video streams (1, 2) in the form of a sequence of images (20, 21) comprising each video stream (1, 2);
   • rectifying (83) the images (20, 21) of the video streams (1, 2) along epipolar lines (30);
   • for each epipolar line (30) of the video streams (1, 2): extracting (84) the epipolar line (40) in each rectified image (22, 23) of each video stream (1, 2); for each video stream (1, 2), assembling the epipolar lines (40) extracted from each rectified image (22, 23), said assembling step composing an image of a temporal epipolar line (LET1, LET2, LET3, LET4, LET5, LET6);
   • for each epipolar line (30) of the video streams (1, 2): calculating a temporal offset value $\delta$ between the video streams (1, 2) by matching the images of a temporal epipolar line (LET1, LET2, LET3, LET4, LET5, LET6) of each video stream (1, 2);
   • calculating (85) a temporal desynchronisation value $D_t$ between the video streams (1, 2) taking into account the temporal offset values $\delta$ calculated for each epipolar line (30) of the video streams (1, 2);
   • synchronising (86) the video streams (1, 2) based on the calculated temporal desynchronisation value $D_t$.

2. The process according to claim 1, **characterised in that** matching (85) is performed by way of correlating the images of a temporal epipolar line (LET1, LET2, LET3, LET4, LET5) for each epipolar line (30) in a frequency domain.

3. The process according to claim 2, **characterised in that** a correlation of two images (LET1, LET2) of a temporal epipolar line (40) comprises at least the following steps:

   ■ calculating the time gradients (60) of first and second images of a temporal epipolar line (LET1, LET2), the first and second images of the temporal epipolar line (LET1, LET2) originating from two video streams (1, 2);
   ■ calculating a Fourier transform (50, 51) of the time gradients (60) of the first and second images of the temporal epipolar line (LET1, LET2);
   ■ calculating the complex conjugate (54) of the of the Fourier transform (52) of the time gradient (60) of the first image of the temporal epipolar line (LET1);
   ■ calculating the product (55) of the complex conjugate (54) and of the result of the Fourier transform (53) of the time gradient (60) of the second image of the temporal epipolar line (LET2),
   ■ calculating a correlation matrix (58) by an inverse Fourier transform calculation (57) of the result of the product (55) calculated during the preceding step;
   ■ calculating the value of the temporal offset $\delta$ between the two video streams (1, 2) by way of analysing the correlation matrix (58).

4. The process according to claim 1, **characterised in that** matching (85) is performed by way of correlating the images of a temporal epipolar line (LET1, LET2, LET3, LET4, LET5) for each epipolar line (30) in a spatial domain.

5. The process according to claim 4, **characterised in that** a correlation of two images of a temporal epipolar line (LET1, LET2) in a spatial domain uses a calculation of a probability function between the two images of the temporal epipolar line (LET1, LET2).

6. The process according to claim 1, **characterised in that** a correlation of two images (LET1, LET2) of the selected temporal epipolar line (40) is performed by decomposition of the two images (LET1, LET2) of the temporal epipolar line (40) into wavelets.

7. The process according to any one of the preceding claims, **characterised in that** the temporal desynchronisation value $D_t$ is calculated by taking a mean value of the temporal offset values $\delta$ calculated for each epipolar line (30).

8. The process according to any one of the preceding claims, **characterised in that** since the acquisition frequencies of the different video streams (1, 2) are different, intermediate images, created by an interpolation of the images which precede and follow them in the video streams (1, 2), complete the lowest frequency video streams (1, 2) until a frequency is reached that is essentially identical to that of the highest frequency video streams.

**Patentansprüche**

1. Verfahren zum Synchronisieren von wenigstens zwei Videoströmen (1, 2), wobei jeder Videostrom von wenigstens einer anderen Kamera stammt, wobei die Kameras ein gemeinsames Sichtfeld haben, **dadurch gekennzeichnet, dass** es weinigstens die folgenden Schritte beinhaltet:

  • Erfassen (81) der Videoströme (1, 2) in Form einer Folge von Bildern (20, 21), die die einzelnen Videoströme (1,2) bilden;
  • Ausrichten (83) der Bilder (20, 21) der Videoströme (1, 2) entlang epipolarer Linien (30);
  • für jede epipolare Linie (30) der Videoströme (1, 2): Extrahieren (84) der epipolaren Linie (40) in jedem ausgerichteten Bild (22, 23) jedes Videostroms (1, 2); für jeden Videostrom (1, 2) Zusammensetzen der von jedem ausgerichteten Bild (22, 23) extrahierten epipolaren Linien (40), wobei das Zusammensetzen ein Bild einer epipolaren Zeitlinie (LET1, LET2, LET3, LET4, LET5, LET6) ergibt;
  • für jede epipolare Linie (30) der Videoströme (1, 2): Berechnen eines Zeitversatzwertes $\delta$ zwischen den Videoströmen (1, 2) durch Abgleichen der Bilder einer epipolaren Zeitlinie (LET1, LET2, LET3, LET4, LET5, LET6) jedes Videostroms (1,2);
  • Berechnen (85) eines zeitlichen Desynchronisationswertes $D_t$ zwischen den Videoströmen (1, 2) unter Berücksichtigung der für jede epipolare Linie (30) der Videoströme (1,2) berechneten Zeitversatzwerte $\delta$;
  • Synchronisieren (86) der Videoströme (1, 2) auf der Basis des berechneten zeitlichen Desynchronisationswertes $D_t$.

2. Verfahren nach Anspruch 1, **dadurch gekennzeichnet, dass** das Abgleichen (85) durch Korrelieren der Bilder einer epipolaren Zeitlinie (LET1, LET2, LET3, LET4, LET5) für jede epipolare Linie (30) in einer Frequenzdomäne erfolgt.

3. Verfahren nach Anspruch 2, **dadurch gekennzeichnet, dass** eine Korrelation von zwei Bildern (LET1, LET2) einer epipolaren Zeitlinie (40) wenigstens die folgenden Schritte beinhaltet:

  ■ Berechnen der Zeitgradienten (60) eines ersten und eines zweiten Bildes einer epipolaren Zeitlinie (LET1, LET2), wobei das erste und das zweite Bild der epipolaren Zeitlinie (LEil, , LET2) von zwei Videoströmen (1, 2) stammt;
  ■ Berechnen einer Fourier-Transformation (50, 51) der (60) des ersten und zweiten der epipolaren Zeitlinie (LET1, LET2);
  ■ Berechnen des komplexen Konjugat (54) des Ergebnisses der Fourier-Transformation (52) des Zeitgradienten (60) des ersten Bildes der epipolaren Zeitlinie (LET1);
  ■ Berechnen des Produkts (55) des komplexen Konjugats (54) und des Ergebnisses der Fourier-Transformation (53) des Zeitgradienten (60) des zweiten Bildes der epipolaren Zeitlinie (LET2);
  ■ Berechnen einer Korrelationsmatrix (58) durch eine umgekehrte Fourier-Transformationsberechnung (57) des Ergebnisses des im vorherigen Schritt berechneten Produkts (55);
  ■ Berechnen des Zeitversatzwertes $\delta$ zwischen den beiden Videoströmen (1, 2) durch Analysieren der Korrelationsmatrix (58).

4. Verfahren nach Anspruch 1, **dadurch gekennzeichnet, dass** das Abgleichen (85) durch Korrelieren der Bilder einer epipolaren Zeitlinie (LET1, LET2, LET3, LET4, LET5) für jede epipolare Linie (30) in einer Raumdomäne erfolgt.

5. Verfahren nach Anspruch 4, **dadurch gekennzeichnet, dass** eine Korrelation von zwei Bildern einer epipolaren Zeitlinie (LET1, LET2) in einer Raumdomäne eine Berechnung einer Wahrscheinlichkeitsfunktion zwischen den beiden Bildern der epipolaren Zeitlinie (LET1, LET2) benutzt.

6. Verfahren nach Anspruch 1, **dadurch gekennzeichnet, dass** eine Korrelation von zwei Bildern (LET1, LET2) der gewählten epipolaren Zeitlinie (40) durch Zerlegen der zwei Bilder (LET1, LET2) der epipolaren Zeitlinie (40) in Wavelets erfolgt.

7. Verfahren nach einem der vorherigen Ansprüche, **dadurch gekennzeichnet, dass** der zeitliche Desynchronisationswert $D_t$ durch Nehmen eines Mittelwertes der für jede epipolare Linie (30) berechneten Zeitversatzwerte $\delta$ berechnet wird.

8. Verfahren nach einem der vorherigen Ansprüche, **dadurch gekennzeichnet, dass**, da die Erfassungsfrequenzen der verschiedenen Videoströme (1, 2) unterschiedlich sind, Zwischenbilder, die durch eine Interpolation der ihnen vorangehenden und folgenden Bilder in den Videoströmen (1, 2) erzeugt werden, die Videoströme (1, 2) der tiefsten Frequenz vervollständigen, bis eine Frequenz erreicht ist, die mit der der Videoströme der höchsten Frequenz im Wesentlichen identisch ist.

## FIG.1

## FIG.2

FIG.3

FIG.4

FIG.5

FIG.6

EP 2 208 355 B1

FIG.7

Acquisition des flux
vidéo ——81

Ajustement des fréquences
d'acquisition des flux vidéo ——82

Rectification des images des
flux vidéo ——83

Extraction des lignes
épipolaires temporelles ——84

——80

Calcul de la désynchronisation
des flux vidéo ——85

Synchronisation
des flux vidéo ——86

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2006228144 A

**Littérature non-brevet citée dans la description**

- **Lily Lee ; Raquel Romano ; Gideon Stein.** Activities From Multiple Video Stream : Establishing a Common Coordinate Frame. *IEEE Transactions on Pattern Recoginition and Machine Intelligence, Special Section on Video Surveillance and Monitoring,* 2000, vol. 22 (8
- **J. Kang ; Cohen, G. Medioni.** Continuous muti-views traking using tensor voting. *Proceeding of Workshop on Motion and Video Computing,* 2002, 181-186
- **M. A. Fischler ; R. C. Bolles.** *Random Sample Consensus: A Paradigm for Model Fitting with Applications to Image Analysis and Automated Cartography,* Juin 1981
- **A. Whitehead ; R. Laganiere ; P. Bose.** Projective Space Temporal Synchronization of Multiple Video Sequences. *Proceeding of IEEE Workshop on Motion and Video Computing,* 2005, 132-137
- **Richard Hartley ; Andrew Zisserman.** Multiple View Geometry
- **Qi Zang ; Reinhard Klette.** *Evaluation of an Adaptive Composite Gaussian Model in Video Surveillance*
- **D. Oram.** *Rectification for Any Epipolar Geometry*